# EUROPEAN PATENT APPLICATION

(11) **EP 1 892 686 A1**
(43) Date of publication of application: **27.02.2008**
(21) Application number: 06766754.3
(22) Date of filing: 15.06.2006
(51) Int. Cl.: G08B 25/04

(54) **USE MANAGEMENT SYSTEM**

(30) Priority: 17.06.2005 JP 2005177135
(71) Applicant: Dai Nippon Printing Co., Ltd., Tokyo 162-8001 (JP)
(72) Inventor: CHIKADA, Takayuki, DAI NIPPON PRINTING CO., LTD., Tokyo 162-8001 (JP)
(74) Representative: Needle, Jacqueline
(86) International application number: PCT/JP2006/312020
(87) International publication number: WO 2006/135000

(57) **Abstract**

A use management system includes: a facility equipment which includes a use control unit for executing control of switching the facility equipment between a usable state and a disabled state; a portable storage medium which stores identification information; a portable storage medium reading device which reads the identification information from the portable storage medium; and an information management device which is connected to and communicates with the facility equipment and the portable storage medium reading device. The information management device includes: a use authority information database which is associated with the identification information, and which registers individual information of a person having the portable storage medium and use authority information of the facility equipment; a determination unit which determines existence or nonexistence of a use authority of the facility equipment based on the identification information received from the portable storage medium reading device and the use authority information registered in the use authority information database; and a unit which transmits an instruction signal to make the facility equipment usable to the facility equipment when it is determined in the determination unit that the use authority exists.

## Description

### Technical Field

The present invention relates to a use management system capable of executing unified use restriction management of a person having no use authority of a facility equipment.

### Background Technique

Conventionally, an important document including absolutely confidential contents outside a company, such as a contract, specifications, a design drawing and company data, is strictly managed by a method of storing it in a document shelf such as a cabinet in the company.

Generally, the important document is usually managed and stored in a cabinet including a locking/unlocking device having a key so that the third person cannot easily steal the document and illegally see the contents thereof.

However, someemployeesmaybemalicious. Theremayhappen such an office crime that even an employee steals the important document for the purpose of money, requested by a third person.

For example, the employee belonging to the personnel department can easily know the cabinet in which the important document is stored and a storage place of a key for unlocking the cabinet.

Thus, the employee can steal the important document stored in the cabinet by himself or herself when no other workers are in the office, e.g., a holiday. Therefore, there is such a problem that the office crime committed by the trusted employee cannot be easily prevented.

As a background technique, there is proposed a technique for ensuring security, in which information of fingerprints, a voice pattern, a retina and a face of a person unlocking the key is registered in advance and certification is executed based on the registered information at the time of unlocking the key of the box in which the document is stored (see Patent Reference-1, for example).

However, in such a case that the plural employees often take the documents out of the box in which the cabinet is stored and see them at work, a certification process based on the registration information is executed in each time. Therefore, it is problematic that it takes a long time and the efficiency of the work becomes low.

Patent Reference-1: Japanese Patent Application Laid-open under No. 2003-269024

In addition, it may happen that the employee uses not only the document in the cabinet but also an electronic device such as a personal computer, a copy machine and a facsimile located in the office and commits the office crime. Thus, it is necessary to take a countermeasure against the office crime by the employee, but there is problematically no effective method.

### Disclosure of Invention

### PROBLEM TO BE SOLVED BY THE INVENTION

It is an object of this invention to provide a use management system for effectively preventing an employee from committing a crime in a method of illegally taking out and misusing an important document stored in a cabinet and/or in a method of illegally using an electronic device such as a personal computer, a copy machine and a facsimile.

### Means for Solving the Problem

According to one aspect of the present invention, there is provided a use management system capable of executing unified use management of a facility equipment, including: a facility equipment which includes a use control unit for executing control of switching the facility equipment between a usable state and a disabled state; a portable storage medium which stores identification information; a portable storage medium reading device which reads the identification information from the portable storage medium; and an information management device which is connected to and communicates with the facility equipment and the portable storage medium reading device, wherein the information management device includes: a use authority information database which is associated with the identification information, and which registers individual information of a person having the portable storage medium and use authority information of the facility equipment; a determination unit which determines existence or nonexistence of a use authority of the facility equipment based on the identification information received from the portable storage medium reading device and the use authority information registered in the use authority information database; and a unit which transmits an instruction signal to make the facility equipment usable to the facility equipment when it is determined in the determination unit that the use authority exists.

In the information management device, since the above use management system determines whether or not the identification information of the portable storage medium received from the portable storage medium reading device has the use authority of the facility equipment based on the use authority information registered in the use authority information database, even the employee cannot use the facility equipment without the use authority. Thus, even when the employee uses the facility equipment without permission and commits a crime, he or she cannot accomplish the purpose. Therefore, there is such an effect that the office crime of the employee can be prevented.

In a manner of the above use management system, the facility equipment may be a cabinet including a door having a key, and the use control unit may be a locking/unlocking device for managing taking-off of a stored item in the cabinet by switching a locking/unlocking state of the key.

In this manner, there is such an effect that the employee having no use authority can be prevented from taking out the stored item such as the important document stored in the cabinet without permission.

In another manner of the above use management system, the facility equipment may be an electronic device.

In this manner, since the employee having no use authority cannot use the electronic device such as the personal computer, the copy machine and the facsimile without permission, there is such an effect that the office crime committed by the employee can be prevented.

In still another manner of the above use management system, the use authority information may include use time period information permitted to use the facility equipment.

In this manner, since the use time period information permitted to use the facility equipment is registered in the use authority information database of the information management device, in the time period when a manager is absent, the facility equipment cannot be used and the accurate use management can be executed. Therefore, there is such an effective that the office crime can be prevented.

### BRIEF DESCRIPTION OF THE DRAWINGS

FIG. 1 is a diagram for schematically explaining a configuration of a use management system according to an embodiment of the present invention;
FIG. 2 is ablockdiagramof a use management system according to the embodiment of the present invention;
FIG. 3 is a diagram showing an example of registration information of a use authority information database provided in an information management device of a use management system according to the embodiment of the present invention; and
FIG. 4 is a flow chart showing a procedure of the use management system according to the embodiment of the present invention.

### BRIEF DESCRIPTION OF THE REFERENCE NUMBER

- 1: Cabinet
- 2: Personal computer
- 3: Facsimile
- 4: Copy machine
- 5,10: IC card readers
- 6: Non-contact IC card
- 7: Cabinet locking/unlocking device
- 8: Exit door
- 9: Door locking/unlocking device

### DETAILED DESCRIPTION OF THE PREFERRED EMBODIMENTS

Now, a description will be given of a use management system according to an embodiment of the present invention, with reference to the attached drawings.

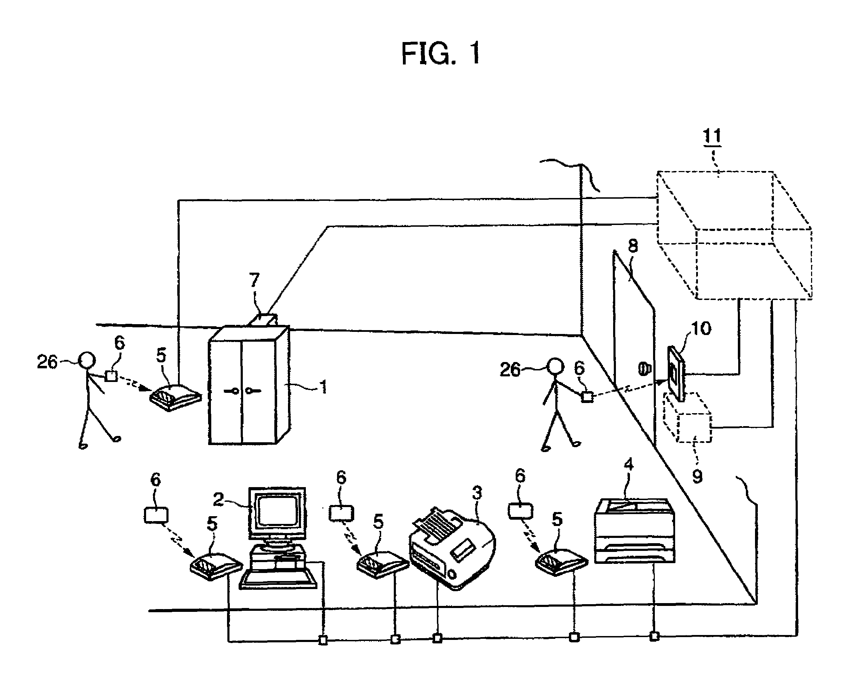

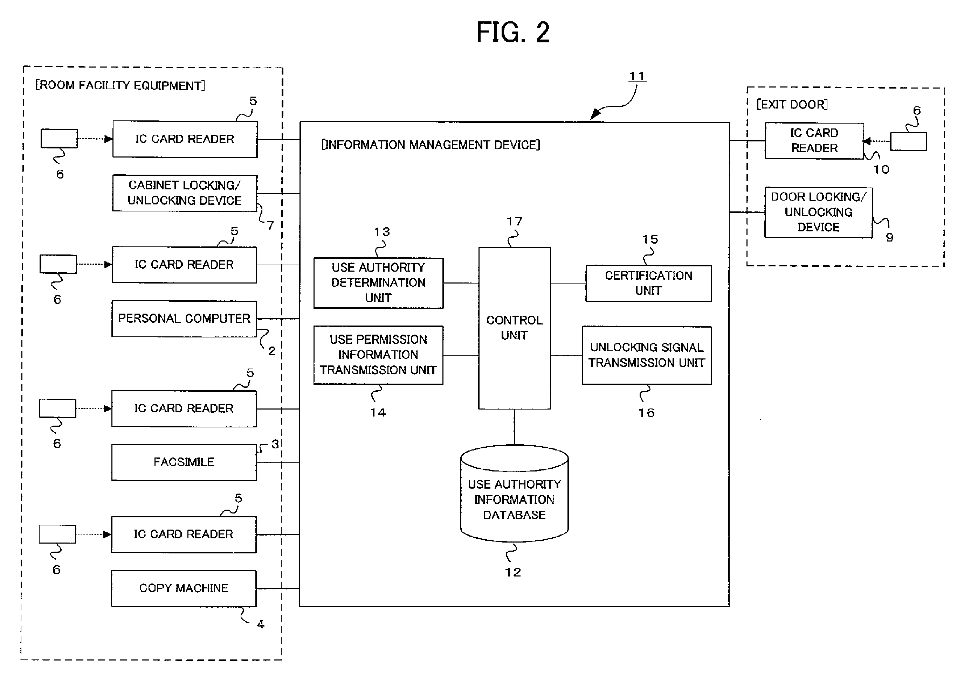

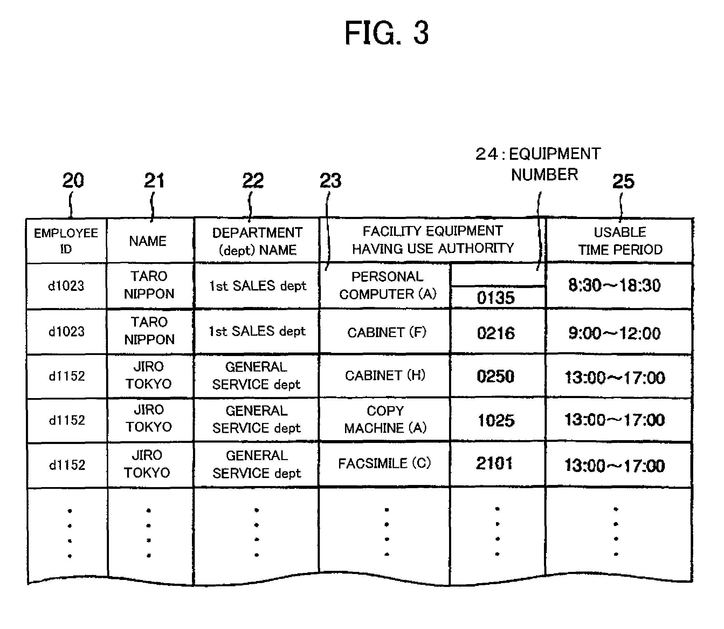

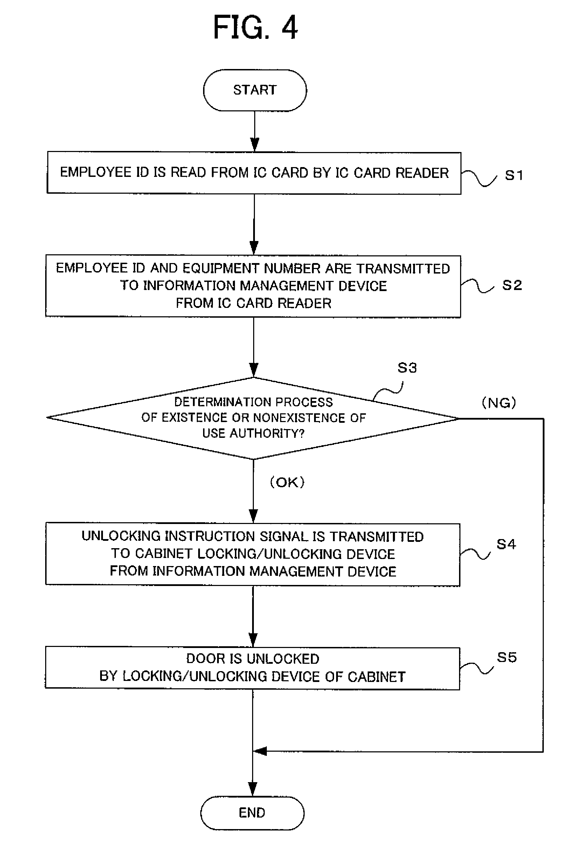

FIG. 1 is a diagram for schematically explaining a configuration of a use management system according to an embodiment of the present invention. FIG. 2 is a block diagram of the use management system according to the embodiment of the present invention. FIG. 3 is a diagram showing an example of registration information of a use authority information database provided in an information management device of the use management system according to the embodiment of the present invention. FIG. 4 is a flow chart showing a procedure of the use management system according to the embodiment of the present invention.

As shown in FIG. 1, plural facility equipments are located in a room.

The plural facility equipments are electronic devices such as a cabinet 1 including a cabinet locking/unlocking device 7 for storing an important document, a personal computer 2, a facsimile 3 and a copy machine 4, for example.

The cabinet 1 includes a door having a key and a locking/unlocking device 7 for maintaining the door usually locked by the key.

A non-contact IC card reader 5 being a portable storage medium reading device is located in the vicinity of each of the facility equipments. By the IC card reader 5, an employee 26 using the facility equipment can make an employee ID, being identification information, read out from a non-contact IC card 6 being the portable storage medium of an employee ID card issued by a company.

The IC card 6 may be a contact IC card instead of the non-contact IC card. In this case, the IC card reader is also a contactable IC card reader.

A locking/unlocking device 9 for maintaining the door usually locked with the key is located at an exit door 8 of the room, and an IC card reader 10 is located in the vicinity of the exit door 8.

The cabinet 1 including the cabinet locking/unlocking device 7, the personal computer 2, the facsimile 3 and the copy machine 4, being facility equipments, each of the IC card readers 5 and 10 and the door locking/unlocking device 9 of the exit door are connected to and communicate with an information management device 11 via a communication circuit.

As described above, the electronic devices, such as the cabinet 1 including the cabinet locking/unlocking device 7, the personal computer 2, the facsimile 3 and the copy machine 4, are referred to as facility equipments.

The employee IDbeing the identification information stored on the IC card read by each of the IC card readers 5 and 10 is transmitted to the information management device 11 via the communication circuit.

An instruction signal for unlocking the cabinet locking/unlocking device 7, and instruction signals for controlling the personal computer 2, the facsimile 3 and the copy machine 4 to be usable are transmitted to each of the devices and the electronic devices from the information management device 11 via the communication circuit.

As shown in FIG. 2, the information management device 11 includes a use authority information database 12, a use authority determination unit 13, a use permission information transmission unit 14, a certification unit 15, an unlocking signal transmission unit 16 and a control unit 17.

As shown in FIG. 3, information such as an employee ID 20, an employee name 21, an employee department name 22, a name 23 of the facility equipment including the use authority, an equipment number 24 thereof and a usable time period 25 of the equipment is registered in the use authority information database 12 in advance.

Based on the employee ID 20 and the equipment number 24 of the facility equipment in the registration information of the use authority information database 12, the determination of the use authority of each employee is executed to the facility equipment. At the same time, the timelike determination showing when the equipment is usable is executed by the usable time period 25 of the equipment.

Therefore, in such a case that there is an employee moving to or entering from the other department in accordance with a personnel transfer, such a process that the use authority is removed or given in accordance with the position of the employee is executed to the registration information of the use authority information database 12. Thereby, the appropriate determination can be automatically executed.

In such a case that the electronic device such as the cabinet 1, the personal computer 2, the facsimile 3 and the copy machine 4 and the non-contact IC card reader 5 provided in the locking/unlocking device 7 of the cabinet 1 transmits the identification information read from the IC card to the information management device 11, the use authority determination unit 13 executes the determination process whether or not the employee having the identification information has the use authority of the facility equipment, based on the registration information of the identification number 24 of the facility equipment having the use authority registered in the use authority information database 12 and the usable time period 25 of the equipment in the information management device 11.

When the non-contact IC card reader 5 provided for the electronic equipments such as the cabinet 1, the personal computer 2, the facsimile 3 and the copy machine 4 and the locking/unlocking device 7 of the cabinet 1 transmits the identification information read out from the IC card to the information management device 11, the use authority determination unit 13 performs the determination process as to whether an employee has a use authority of the facility equipment based on the identification information 24, stored in the use authority information database 12, of the facility equipment and the registered information of the time period 25 during which the equipment is usable.

In such a case that it is determined that the employee has the use authority of the facility equipment and the time is within the usable time period on the basis of the result of the determination process by the use authority determination unit 13, the use permission information transmission unit 14 transmits the instruction signal for making the facility equipment usable to the facility equipment, that the employee has the use authority, from the information management device 11.

Thus, each of the facility equipments includes a control function to make a power source in an ON state on condition that each of the facility equipments receives the instruction signal for making the facility equipment usable from the information management device 11, and the control of using each of the facility equipments is managed by the information management device 11.

Namely, each of the facility equipments cannot be used without receiving the instruction signal to make the facility equipment usable from the information management device 11.

Next, in such a case that the IC card reader 10 located in the vicinity of the exit door 8 transmits the identification information read from the IC card to the information management device 11, the certification unit 15 executes the certification process whether or not the employee is the regular employee, based on the information of the employee ID 20 registered in the use authority information database 12 of the information management device 11.

In such a case that the approval is given in the certification process of the certification unit 15, the unlocking signal transmission unit 16 transmits the instruction signal for unlocking the key of the exit door to the door locking/unlocking device 9 of the exit door from the information management device 11.

The door locking/unlocking device 9 of the exit door is usually locked. However, on receiving the instruction signal from the information management device 11, the door locking/unlocking device 9 unlocks the key of the exit door.

Therefore, the person who is not approved by the certification process cannot exit through the exit door.

In such a case that the same device as the door locking/unlocking device of the exit door is located at an entrance door or the exit door is also used as the entrance door, the IC card reader is also located on the outside of the door, and the employee ID stored on the IC card of the employee entering the room is read by the IC card reader. Thereby, it is preferred that such a certification process that the read employee ID is transmitted to the information management device 11 is executed and the management of the locking/unlocking of the door locking/unlocking device on the basis of the result of the certification process is executed.

Next, a description will be given of a procedure of the use management system according to the embodiment of the present invention, with reference to the flow chart shown in FIG. 4.

Even when the employee 26 uses any one of the facility equipments, i.e., the cabinet 1, the personal computer 2, the facsimile 3 and the copy machine 4, which are located in the room, the process for the use of the facility equipments is executed by the similar procedure. Therefore, a description will now be given of the procedure in such a case that the employee takes off the document stored in the cabinet 1, as an example.

In this case, a behavior of taking off the document stored in the cabinet 1 is prescribed as a behavior of using the cabinet 1 being the facility equipment.

First, the employee 26 puts the IC card 6 close to the non-contact IC card reader 5. Thereby, the employee ID stored on the IC card 6 is read by the IC card reader 5 (step S1).

The employee ID and the equipment number are transmitted to the information management device 11 from the IC card reader 5 (step S2).

The information management device 11 receiving the employee ID collates the equipment number 24 of the facility equipment having the use authority and the usable time period 25 of the equipment, which are registered in the use authority information database 12, and executes the determination process whether or not the employee 26 has the use authority (step S3).

When it is determined that the employee has the use authority by the result of the determination process of the use authority, the instruction signal for permitting the use and unlocking the door is transmitted to the locking/unlocking device 7 of the cabinet 1 from the information management device 11 (step S4).

By receiving the instruction signal for unlocking from the information management device 11, the locking/unlocking device 7 of the cabinet 1 unlocks the key of the cabinet 1 (step S5).

By the above process, the employee 26 can open the door of the cabinet 1 and take off the desired document.

In addition, when the facility equipment is the electronic device such as the personal computer 2, the facsimile 3 and the copy machine 4, if it is determined that the employee has the use authority by the result of the determination process of the use authority, the instruction signal for permitting to make the power source of the electronic device in the ON state is transmitted to the electronic device from the information management device 11.

Thereby, when the electronic device is made in the ON state in order to use the electronic device, the power source can be made in the ON state, and the electronic device becomes usable.

### INDUSTRIAL APPLICABILITY

The present invention is usable for a document management system in a corporation, a public institution and other places.

## Claims

1. A use management system capable of executing unified use management of a facility equipment, comprising:
a facility equipment which includes a use control unit for executing control of switching the facility equipment between a usable state and a disabled state;
a portable storage medium which stores identification information;
a portable storage medium reading device which reads the identification information from the portable storage medium; and
an information management device which is connected to and communicates with the facility equipment and the portable storage medium reading device,
wherein the information management device includes:
a use authority information database which is associated with the identification information, and which registers individual information of a person having the portable storage medium and use authority information of the facility equipment;
a determination unit which determines existence or nonexistence of a use authority of the facility equipment based on the identification information received from the portable storage medium reading device and the use authority information registered in the use authority information database; and
a unit which transmits an instruction signal to make the facility equipment usable to the facility equipment when it is determined in the determination unit that the use authority exists.

2. The use management system according to claim 1,
wherein the facility equipment is a cabinet including a door having a key, and
wherein the use control unit is a locking/unlocking device for managing taking-off of a stored item in the cabinet by switching a locking/unlocking state of the key.

3. The use management system according to claim 1, wherein the facility equipment is an electronic device.

4. The use management system according to claim 1, wherein the use authority information includes use time period information permitted to use the facility equipment.
